# EUROPEAN PATENT APPLICATION

(11) **EP 3 533 545 A1**
(43) Date of publication of application: **04.09.2019**
(21) Application number: 18159416.9
(22) Date of filing: 01.03.2018
(51) Int. Cl.: B23B 51/00, B23B 51/02, B23B 51/06, B23C 5/00, B23C 5/28, B23D 77/00, B22F 7/06, B23P 15/32, B23P 15/34, B23P 15/36, B23P 15/46, B23P 15/52, B33Y 80/00, B33Y 10/00, B23G 5/00, B23G 5/18

(54) **MODULAR CUTTING TOOL BODY AND METHOD FOR MANUFACTURING THE SAME**

(71) Applicant: AB Sandvik Coromant, 811 81 Sandviken (SE)
(72) Inventor: ROYER, Raphael, FR-45100 Orléans (FR)
(74) Representative: Sandvik

(57) **Abstract**

A cutting tool body is disclosed, comprising a first member and a second member, both having a substantially cylindrical shape, and arranged such that a tool body central axis coincides with a central axis of each of the first and the second members. The first member has a tool characteristic of a first magnitude, and the second member has the tool characteristic of a second magnitude, different from the first magnitude. The cutting tool body comprises a transition member arranged between the first and second members and connected at a first end to the first member and at a second end to the second member. The tool characteristic in the transition member is of the first magnitude at the first end, and of the second magnitude at the second end. The transition member comprises a transition region between the first and the second ends in which the tool characteristic transforms from the first magnitude to the second magnitude.

## Description

### TECHNICAL FIELD

The invention relates to a cutting tool body as well as a process for manufacturing such cutting tool body.

### BACKGROUND ART

A cutting tool, for example a drill or an end mill, made of cemented carbide, is usually manufactured by machining tool blanks (e.g. cylindrical rods), which may involve grinding chip flutes and cutting edges. To manufacture a cutting tool having a complex geometry, such as a step drill having different parts with different diameters, extensive and time-consuming machining of the tool blank is required. Manufacturing of such tools is therefore often difficult and costly. Some complex geometries are not even possible to manufacture using conventional techniques. US9498824 B2 discloses a method that allows for the fabrication of tools having complex internal profiles wherein sintered parts with different sizes and shapes are joined to form a unitary tool. Joining of separately manufactured parts would increase the number of possible tool geometries that can be manufactured. However, when using conventional tool parts, the kind of tool geometries that can be manufactured is still restricted.

### SUMMARY

It is an object of the present invention to mitigate the shortcomings of the prior art and to provide high-performance solid cutting tools with complex geometries using a flexible method of manufacturing.

Thus, according to a first aspect, the invention relates to a cutting tool body comprising a first member and a second member, both having a substantially cylindrical shape, and arranged such that a tool body central axis coincides with a central axis of each of the first and the second members. The first member has a tool characteristic of a first magnitude, whereas the second member has the tool characteristic of a second magnitude, different from the first magnitude. The cutting tool body comprises a transition member arranged between the first and second members and connected at a first end to the first member and at a second end to the second member. The tool characteristic in the transition member is of the first magnitude at the first end, and of the second magnitude at the second end. The transition member comprises a transition region between the first and the second ends in which the tool characteristic transforms from the first magnitude to the second magnitude.

The first and second magnitude of the tool characteristic may be constant over the whole axial length of the first and second member, respectively.

The cutting tool body may be a cutting tool in which, for example, at least one chip flute and one or more cutting edges have been formed, or to which one or more cutting inserts or an exchangeable cutting head is attachable. Alternatively, the cutting tool body may be a tool blank, in which features such as flutes or cutting edges have not yet been formed.

In the case the cutting tool body refers to a cutting tool, the first member, the second member and the transition member are preferably joined in a state where the final shape has not yet been machined, i.e. before flutes and any cutting edges have been formed. In other words, the members may be connected as parts of a tool blank and thereafter the blank is processed, for example grinded and post-processed in other ways, to form a cutting tool. However, it is also conceivable that the members are processed into the final shape before being connected to each other.

The separate members of the cutting tool body may be manufactured using similar or different manufacturing methods. The first and second members are preferably manufactured using conventional manufacturing methods. The transition member is preferably manufactured using a different manufacturing method more suitable for manufacturing complex geometries. However, it is also possible to use the same manufacturing method for all the members.

The members are preferably permanently, i.e. non-detachably, connected to each other. For some geometries, it is important that the different members are correctly aligned not only in the axial direction but also in the rotational direction, when connected to each other. The ends of the transition member, and the respective ends of the first and second members connected thereto, are usually flat. Hence, the end surfaces connected to each other may have the exact same geometry. However, the ends may also be non-flat, with geometries being complementary to each other. For example, an end surface of the transition member may be partly convex, or having some sort of protrusion, and the end surface of the first or second member which is connected to the transition member may be partly concave or having a recess complimentary to the protrusion, such that the surfaces can be fitted to each other in a limited number of rotational positions. This may facilitate assembling of tool bodies having multiple (and thus non-centrally arranged) coolant channels, or other features where a correct alignment in the rotational direction is required. In such embodiments, the end surfaces connected to each other would not have the exact same geometry (but rather complimentary geometries). Nonetheless, the *tool characteristic* being subject to transformation is the same at both ends that are connected to each other.

The expression "substantially cylindrical shape" is to be interpreted as essentially cylindrical at least in part, for example such that any cutting edges formed in the cutting tool body generate a cylindrical outer envelope when the tool body is rotated. Thus, the expression includes members having chip flutes or other recesses formed in an otherwise cylindrical outer surface, and members of which one end is tapered, e.g. for defining a drill tip.

The transition member may have a central axis that also coincides with the central axes of the first and second members when the members are connected. Similar to the first and second members, the transition member may be substantially cylindrical. The transition member may also be substantially cone shaped, i.e. tapered, along the whole of, or a part of, the axial extension thereof.

An advantage of using separately manufactured members of the cutting tool body is that a great variety of tools can be manufactured. With a relatively small number of different first and second members, which could be considered as different "standard" pieces, and a set of different transition members with a more complex geometry, a great number of different tools can be manufactured. Thus, improved flexibility is achieved since a relatively small stock of different components is sufficient for manufacturing many different cutting tools. This "modular" approach for manufacturing cutting tools is particularly suitable for manufacturing tools with complex geometries. The transition member may provide a smooth transition between the different geometries of the first and the second members. The use of transition members improves the manufacturability of the tools and results in cutting tools having improved performance.

The tool characteristic may be defined by one of, or a combination of two or more of:
- a tool body diameter,
- a flute helix angle,
- the cross-sectional area of an internal coolant channel,
- the number of internal coolant channels,
- an internal coolant channel helix angle, and
- a radial distance between the tool body central axis and the center of a coolant channel.

Hence, the tool characteristic may relate at least in part to the design of one or more coolant channels formed within the cutting tool body. The tool characteristic may also be defined at least in part by the external diameter of the cutting tool body, or the helix angle of flutes in the tool body. The tool characteristic is often defined as a combination of multiple aspects, such as a combination of the tool body diameter and aspects relating to the design of one or more coolant channels. For example, the tool characteristic may be defined as a combination of two or more aspects relating to the design of the coolant channel(s), with or without further being combined with the tool body diameter. Usually, the helix angle of the flutes corresponds to the helix angle of any internal coolant channels, and therefore these parameters usually transform in a synchronized way in a transition member. The cross-sectional area of a coolant channel is to be interpreted as the area of the coolant channel in a cross section taken in a plane perpendicular to the extension of the coolant channel (i.e. perpendicular to the tool central axis for a straight coolant channel, but not so for a helical coolant channel). The coolant channels may have circular cross-sections, but other shapes are also possible. The transition member may transform a first shape of a coolant channel in the first member to a second shape of the coolant channel in the second member.

The tool diameter of all different members is preferably within a range of 3-35 mm. The cross-sectional area of any coolant channel in the members is preferably within a range of 0.01-28 mm² (i.e. corresponding to a diameter between approximately 0.1-6 mm for channels having a circular cross-section). The helix angle of any flute and/or any internal coolant channel is preferably within a range of 0° - 60°, where 0° corresponds to straight flutes and/or coolant channels extending in a direction parallel to the tool central axis.

The transition member of the cutting tool body may be made by additive manufacturing. Additive manufacturing provides greater possibilities to manufacture transition members with complicated geometries, and is particularly suitable for manufacturing transition members where internal structures, such as the coolant channel configuration, varies. Various kinds of additive manufacturing methods could be used, such as, for example, selective laser sintering or electron beam melting. If members are connected before being processed into a final shape, the transition member is preferably manufactured as a tool blank part that is subsequently grinded together with the first and second members. But if the members are connected after being processed into a final shape, the transition member can be directly manufactured with flutes and other features required, minimizing the need for post-machining. The first and second members could be made by additive manufacturing as well, but would normally be manufactured by conventional production methods.

The axial length of the transition region of the transition member may correspond to the axial length of the transition member. Hence, the transition region could cover the whole transition member such that the transition starts immediately at the interface between the first member and the transition member and ends at the interface between the transition member and the second member. Alternatively, the axial length of the transition region is shorter than the axial length of the transition member such that the transition region only covers a part of the transition member. In such embodiments, the transition member would have a region with non-zero axial extension at the first end where the tool characteristic has the first magnitude and/or a region with non-zero axial extension at the second end where the tool characteristic has the second magnitude.

The transformation of the tool characteristic from the first magnitude to the second magnitude may be continuous and uniform for at least a part of the tool characteristic. A continuous and uniform transition means that the tool characteristic is transformed smoothly from the first magnitude to the second magnitude, without any sudden changes in the geometry. Due to this, adverse effects could be avoided, for example with respect to the coolant flow. All aspects of the tool characteristic subject to transformation may transform continuously and uniformly. Alternatively, only a subset of the aspects of the tool characteristic may transform continuously and uniformly, whereas other aspects transform non-uniformly.

The transition member may be comprised of two or more different transition member parts connected to each other. Hence, a greater variety of transition members could be obtained using a small set of predefined transition member parts. For transition members having one or more helical coolant channels, the channels may be temporarily transformed into a single, centrally arranged, straight coolant channel configuration in the junction between the different parts of the transition member. This facilitates combining different transition member parts into various kinds of transition members transforming some tool characteristic in a specific way. Another advantage of such single coolant configuration may also be to allow some small angular offset between first and second members with helical coolant channels, facilitating assembling of the tool body.

The transition member may comprise at least one coolant channel opening in a peripheral surface of the transition member. Hence, the transition member could provide the further effect of conveying coolant to the exterior of the tool body. In other words, in addition to any transformation from a first magnitude to a second magnitude of a tool characteristic, one or more additional coolant channels may be formed in the transition member that branches off from the main flow to supply coolant to the exterior of the tool body. In this way, distribution of coolant could be obtained by such a transition member without having to modify the first or the second members. This could be advantageous since the first and second members preferably are standardized pieces of the modular cutting tool body.

It is also conceivable that a member is used in a tool body solely for providing coolant to the exterior of the tool body, without transforming any tool characteristic from a first magnitude in a first member to a second magnitude in a second member.

Preferably, both the transition member and the first and second members are made of cemented carbide. Alternatively, it is possible that a different material, such as steel, is used for one or more of the members. If the cutting tool body comprises additional parts, such parts could also be made of a different material. For example, a steel part could be connected to the first member (at the end not connected to the transition member) using a threaded connection.

The cemented carbide may be of the same composition for all members. However, the transition member may also be made of cemented carbide having a different composition than the cemented carbide of the first and/or second member. Thus, the members could be of two or more different compositions and being different with respect to grade and/or grain size, for example.

The cutting tool body may comprise a third member and a second transition member, wherein the second transition member is located between the second and third members and connected at a first end to the second member and at a second end to the third member. Using a second transition member for connecting a third member facilitates production of even more complex tool geometries, such as, for example, drills having a step and a change of the coolant channel geometry at different locations. For example, in such a tool, a first transition could relate to a change in the tool body external geometry, and a second transition could relate to a change in coolant channel pitch and/or diameter. Furthermore, the use of multiple transition members could be advantageous also for tool bodies with constant diameter, for example where a first transition could be for changing the helix angle of the flutes and the coolant channels, and a second transition could be for changing the number of coolant channels or diameter of the coolant channels.

It is also possible that the tool characteristic subject to transition is the same for the transition members. In this case, the second magnitude of the tool characteristic being transformed from the first member to the second member by the first transition member would be equal to the first magnitude of the tool characteristic being transformed from the second member to the third member by the second transition member.

The invention is not limited to any number of members used. As an example, additional transition members are required for making a step drill with more than two steps. For example, to make a step drill with four steps, at least five ordinary members and four transition members would be required.

The cutting tool body could be any kind of rotatable cutting tool, such as one of:
- a drill,
- an end mill,
- a reamer,
- a thread tap,
- a thread mill, or
- a countersink cutter,
or a corresponding tool blank for manufacturing such cutting tool. The cutting tool body may have a complex internal or external geometry, and could be, for example, a drill or an end mill with a complex coolant channel geometry, or a step drill with different parts of the tool having different tool body diameters, with or without internal coolant channels.

According to another aspect, the invention relates to a method for manufacturing a cutting tool body, comprising the steps of:
- manufacturing a first member, a second member, and a transition member,
- connecting a first end of the transition member to the first member and connecting a second end of the transition member to the second member, to create a cutting tool body.

As a subsequent step, at least one flute and/or one or more cutting edges may be formed in the cutting tool body, for example by grinding. Such method, where the modules (i.e. the first member, the second member and the transition member) are in the form of tool blank parts when connected to each other, is particularly convenient and facilitates efficient production of a cutting tool having a complex geometry.

As an alternative, though, the modules could be machined to their respective final shapes before being connected. I.e., the step of manufacturing a first member, a second member, and a transition member may involve forming, for example by grinding, at least one flute and/or one or more cutting edges in at least one of the members.

The members may be connected using sinter fusing. By using sinter fusing, pre-sintered members can be securely and easily connected to each other. Sinter fusing is further discussed in US9498824 B2, which is incorporated herein by reference. As an alternative to sinter fusing, the members could be joined by brazing or welding or in any other suitable way.

### BRIEF DESCRIPTION OF DRAWINGS

Figures 1A-1C show a first member, a second member and a transition member, respectively.
Figure 1D shows a cutting tool body made from the members in figures 1A-1C.
Figure 2A shows a cutting tool body in the form of a tool blank with multiple transition members.
Figure 2B shows a cutting tool body in the form of a cutting tool, manufactured from the tool blank in figure 2A.
Figure 2C is a cross-sectional view along the central axis of the cutting tool in figure 2B.
Figures 3A-3B show examples of transition members.
Figure 4A shows a cutting tool body in the form of a tool blank.
Figure 4B shows a cutting tool body in the form of a cutting tool, manufactured from the tool blank in figure 4A.
Figure 5 is a flowchart illustrating a method for producing a cutting tool.

### DETAILED DESCRIPTION OF EMBODIMENTS

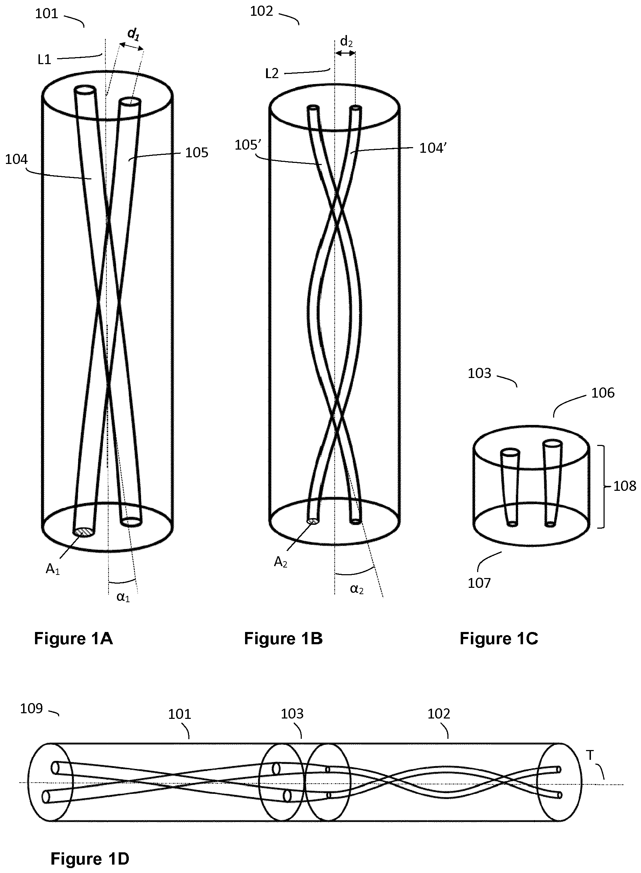

Figure 1A shows a cylindrical first member **101** having a central axis L₁. The first member has two helical internal coolant channels **104, 105,** each of which has a radial distance d₁ from its center to the tool body central axis, a helix angle α₁ and a cross-sectional area A₁. The Figure 1B shows a cylindrical second member having a central axis L₂. The second member **102** has two helical internal coolant channels **104', 105',** each of which has a radial distance d₂ from its center to the tool body central axis, a helix angle α₂ and a cross-sectional area A₂. Figure 1C shows a transition member having at a first end **106** two helical internal coolant channels each of which has a radial distance d₁ from its center to the tool body central axis, a helix angle α₁ and a cross-sectional area A₁, and at a second end **107** two helical internal coolant channels, each of which has a radial distance d₂ from its center to the tool body central axis, helix angle α₂ and a cross-sectional area A₂. Hence, the distance d₁, helix angle α₁ and area A₁ transform continuously and uniformly to distance d₂, helix angle α₂ and area A₂, respectively, when moving from the first end **106** to the second end **107** of the transition member. That is, the geometry of the coolant channels in the transition member corresponds to the geometry of the coolant channels **104, 105** in the first member **101** at the first end **106,** and to the geometry of the coolant channels **104', 105'** in the second member **102** at the second end **107.**

The transition member **103** includes a transition region **108.** The axial length of the transition region **108** corresponds to the axial length of the transition member **103.** In other words, the transition region **108** extends over the whole length of the transition member.

Figure 1D shows a cutting tool body **109** in the form of a tool blank comprising the members shown in figures 1A-1C, connected to each other. The first end **106** of the transition member **103** is connected to the first member **101** and the second end **107** of the transition member **103** is connected to the second tool blank member **102** such that a tool body central axis T of the cutting tool body **109** coincides with the central axes Li, L₂ of the first and second members **101,102** (and consequently also with a central axis of the transition member **103**). For illustrative purposes, the interfaces between the members are clearly shown in the drawings. However, for a real tool, these interfaces may not be visible.

The tool characteristic transformed by the transition member is a combination of the distance between the tool body central axis and the center of each coolant channel, the helix angle, and the cross-sectional area of the coolant channels. This tool characteristic has a first magnitude in the first member defined by the distance d₁, the angle α₁, the area A₁, and a second magnitude in the second member defined by the distance d₂, the angle α₂, the area A₂.

The tool blank members shown in figures 1A-1C are preferably made of cemented carbide and sintered before being connected. The members may be connected by sinter fusing or brazing, for example.

A cutting tool (not shown), for example a twist drill, may be manufactured from the tool blank in figure 1D, where such manufacturing may involve, for example, grinding of flutes and forming of cutting edges in the tool blank. Such cutting tool body would have a first member, a second member, and a transition member corresponding to the respective members **101,102, 103** of the tool blank **109** in figure 1D. The flutes of such cutting tool would preferably have helix angles corresponding to the helix angles of the internal coolant channels.

The transformation of the distance d₁, angle α₁ and area A₁ to distance d₂, angle α₂ and area A₂ in the cutting tool is uniform and continuous. Thus, since the transformation is smooth and with no sudden changes, any adverse effects on the coolant flow, caused by the change, is minimized.

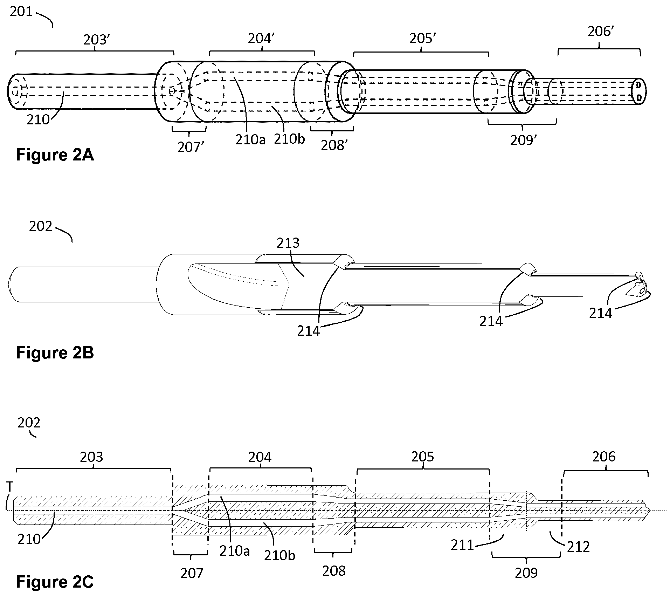

Figures 2A-2C shows another example of a cutting tool body, in the form of a tool blank **201** in figure 2A, and in the form of a step drill **202** in figures 2B and 2C.

In figure 2A, internal coolant channels **212, 212a, 212b** are indicated with dashed lines. The interfaces between the different members **203', 204', 205', 206'** and transition members **207', 208', 209'** of the tool blank **201** are shown with solid lines. However, for a real tool these interfaces are not necessarily visible.

Figure 2B is a side view of a cutting tool **202** made from the tool blank shown in figure 2A. The cutting **tool 202** is a multi-step drill. The step drill **202** has two straight flutes **213** (of which one is shown in the drawing) and six cutting edges **214** (two at the front and two at each "step").

As best seen in figure 2C, the step drill **202** has a first, a second, a third and a fourth member **203, 204, 205, 206** and a first, a second and a third transition member **207, 208, 209** for transforming a respective tool characteristic. In this example, the tool characteristics transformed are the same as for the corresponding members **203', 204', 205', 206'** and transition members **207', 208', 209'** of the tool blank in figure 2A. The first member **203,** which in this example is the shank of the drill, is characterized by a tool body diameter D₁ and one coolant channel **210** with cross-sectional area A₁, located with a radial distance d₁ from its center to the tool body central axis T (d₁=0 since the coolant channel is centrally arranged). The second member **204** is characterized by a tool body diameter D₂ and two coolant channels **(210a, 210b)** each having a cross-sectional area A₂ and located with a radial distance d₂ from its center to the tool body central axis T. The third member **205** is characterized by a tool body diameter D₃ and two coolant channels each having a cross-sectional area A₃ and located with a radial distance d₃ from its center to the tool body central axis T. The fourth member **206** is characterized by a tool body diameter D₄ and two coolant channels each having a cross-sectional area A₄ and located with a radial distance d₄ from its center to the tool body central axis T.

The first transition member **207** provides a transformation of a tool characteristic defined by a combination of the number of channels, a cross-sectional area of the channel, and a radial distance between a coolant channel center and the tool body central axis, i.e. a transformation from a first magnitude defined by the distance d₁, area A₁ and a first number of coolant channels (one) to a second magnitude defined by the distance d₂, area A₂ and a second number of coolant channels (two). However, the tool body diameter changes instantly and is not part of the tool characteristic being transformed by the first transition member **207**. The axial length of the transition region corresponds to the axial length of the transition member **207**. In other words, the transition region extends over the whole length of the transition member. The transformation of the distance d₁ and area A₁ to distance d₂ and area A₂ is uniform and continuous.

The second transition member **208** provides a transformation of a tool characteristic defined by a combination of a tool body diameter, a cross-sectional area of the coolant channels, and a radial distance between a coolant channel center and the tool body central axis, i.e. a transformation from a first magnitude defined by the diameter D₂, distance d₂, and area A₂ to a second magnitude defined by the diameter D₃, distance d₃, and area A₃. The distance d₂ and area A₂ transform into distance d₃ and area A₃, respectively, within a first section of the transition region, whereas the diameter D₂ transforms into diameter D₃ within a second section, partly overlapping the first section, of the transition region. Hence, in the second transition member **208,** all aspects of the tool characteristic are not transformed continuously over the whole length of the transition region.

The third transition member **209** provides a transformation of a tool characteristic defined by a combination of a tool body diameter, a cross-sectional area of the coolant channels, and a radial distance between a coolant channel center and the tool body central axis, i.e. a transformation from a first magnitude defined by the diameter D₃, distance d₃, and area A₃ to a second magnitude defined by the diameter D₄, distance d₄, and area A₄. The third transition member is comprised of two separate transition member parts **211, 212.** The first part **211** transforms the distance d₃ and area A₃ into distance d₄ and area A₄, respectively. The second part **212** transforms the diameter D₃ into diameter D₄. The parts of the transition member are preferably connected to each other during the process when also all the other members are connected. Thus, the transition member does not have to be assembled prior to connecting all the other members of the cutting tool body.

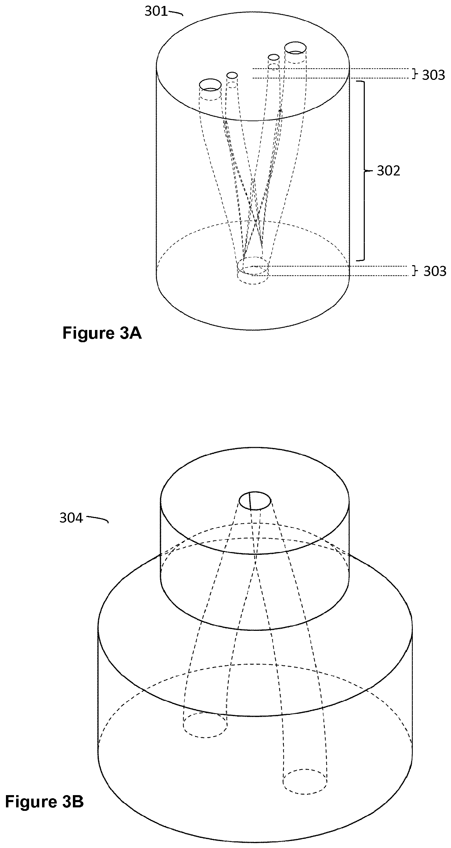

Figure 3A illustrates an example of a transition member **301** for transforming a single, centrally arranged, coolant channel into four separate coolant channels; two with a first cross-sectional diameter and distance from the central axis, and two with a second, different, cross-sectional diameter and distance from the central axis. The axial length of a transition region **302** is smaller than the axial length of the transition member **301**. Accordingly, there is a region **303** at each respective end of the transition member **301** where the geometry of the coolant channel(s) is non-changing.

Figure 3B illustrates an example of a transition member **304** for transforming two coolant channels into a single central coolant channel and also transforming (reducing) the cutting tool body diameter.

Transition members as those shown in figures 3A and 3B may be combined such as to form a single transition member. In such arrangements, the transition members **301** and **304** would be considered as parts of the transition member. A benefit of the "temporary" transformation to a single coolant channel in the junction between the parts **301** and **304** is that such configuration makes it easier to combine different parts with different output- and input geometries. Thus, since parts would be combinable to a greater extent, many different transformations are obtainable using a relatively small set of different transition member parts.

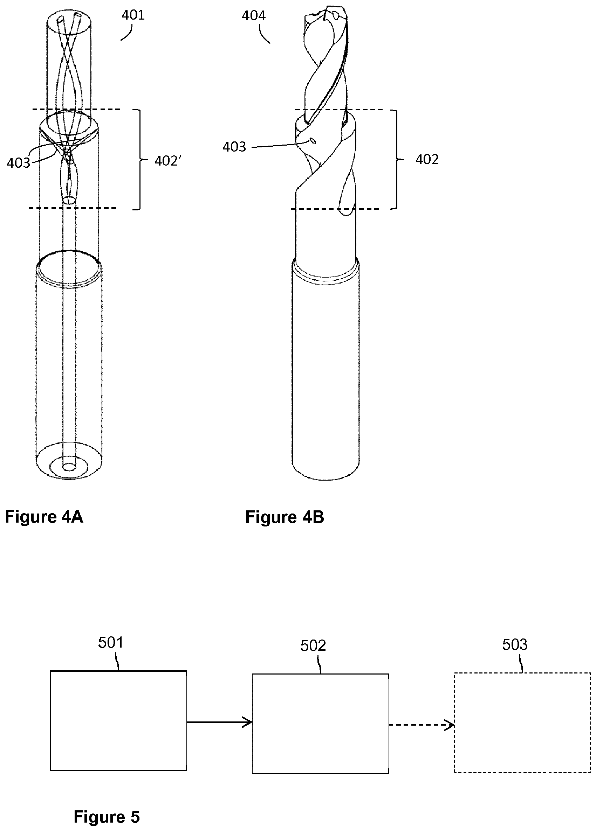

Figure 4A shows another embodiment of a cutting tool body **401** in the form of a tool blank, having a transition member **402'.** This transition member transforms a single straight coolant channel into two helical coolant channels and also transforms the tool body diameter. Furthermore, the transition member includes two additional coolant channels **403** branching off from the internal coolant channels to provide coolant to the exterior of the cutting tool body.

Figure 4B shows a cutting tool **404** (a step drill) made from the tool blank in figure 4A. The additional coolant channels **403** opens in the exterior of a transition member **402** (which corresponds to the transition member **402'** of the tool blank in figure 4A). The coolant channels **403** (of which one is visible in the figure 4B) opens in the region of the diameter transition, i.e. near the cutting edges of the drill's step. Hence, coolant will be efficiently delivered to the region where it is needed. A similar configuration might be advantageous also for other kinds of tools, for example for end mills, where it is beneficial to convey coolant to the peripheral cutting edges, with or without also changing the diameter of the tool body.

Figure 5 is a flowchart illustrating a method for producing a cutting tool body according to the invention.

In step **501,** members of a cutting tool body are manufactured, comprising a first member, a second member and a transition member. Preferably, the first member and the second member are made using conventional manufacturing methods, for example machining (turning) a cemented carbide rod into a specific diameter, drilling coolant holes, etc., followed by sintering. The transition member is preferably manufactured using alternative manufacturing methods, such as additive manufacturing, better suited for creating complex geometries.

In step **502,** a first end of the transition member is connected to the first member and a second end of the transition member is connected to the second member. If the transition member comprises two or more parts, these are also connected. The connection of all members and part of members may be made using sinter fusing or brazing, or any other suitable method for joining parts.

In the optional step **503,** the tool body is machined to form the final shape of a cutting tool. Such machining may involve forming chip flutes and cutting edges, for example by grinding.

## Claims

1. A cutting tool body (101) comprising a first member (101) and a second member (102), both having a substantially cylindrical shape, arranged such that a tool body central axis (T) coincides with a central axis (LI, L2) of each of the first and the second members, wherein
- the first member (101) has a tool characteristic of a first magnitude, and
- the second member (102) has the tool characteristic of a second magnitude, different from the first magnitude,
**characterized in that** the cutting tool body (101) comprises a transition member (103) arranged between the first and second members (102, 103) and connected at a first end (106) to the first member (101) and at a second end (107) to the second member (102), wherein the tool characteristic in the transition member (103) is of the first magnitude at the first end (106), and of the second magnitude at the second end (107), wherein the transition member (103) comprises a transition region (108) between the first and the second ends (106, 107) in which the tool characteristic transforms from the first magnitude to the second magnitude.

2. A cutting tool body according to claim 1, further comprising at least one flute and/or one or more cutting edges.

3. A cutting tool body according to any of the previous claims, wherein the tool characteristic is defined by one of, or a combination of two or more of:
- a tool body diameter,
- a flute helix angle,
- the cross-sectional area of an internal coolant channel,
- the number of internal coolant channels,
- an internal coolant channel helix angle, and
- a radial distance between the tool body central axis and the center of a coolant channel.

4. A cutting tool body according to any of the previous claims, wherein the tool body diameter is within a range of 3 - 35 mm.

5. A cutting tool body according to any of the previous claims, wherein the cross-sectional area of any internal coolant channel is within a range of 0.01 - 28 mm2.

6. A cutting tool body according to any of the previous claims, wherein the helix angle of any flute and/or any internal coolant channel is within a range of 0° - 60°.

7. A cutting tool body according to any of the previous claims, wherein the transition member is made by additive manufacturing.

8. A cutting tool body according to any of the previous claims, wherein the transformation of the tool characteristic from the first magnitude to the second magnitude is continuous and uniform for at least a part of the tool characteristic.

9. A cutting tool body according to any of the previous claims, wherein the first member, the second member and the transition member are made of cemented carbide.

10. A cutting tool body according to any of the previous claims, wherein the tool is one of:
- a drill,
- an end mill,
- a reamer,
- a thread tap,
- a thread mill,
- a countersink cutter.

11. A method for manufacturing a cutting tool body according to any of the claims 1-10, comprising the steps of:
- manufacturing a first member, a second member, and a transition member,
- connecting a first end of the transition member to the first member and connecting a second end of the transition member to the second member, to create a cutting tool body.

12. A method according to claim 11, further comprising the step of forming at least one flute and/or one or more cutting edges in the cutting tool body.

13. A method according to any of the claims 11-12, wherein the step of manufacturing the members comprises the step of manufacturing the members of cemented carbide.

14. A method according to any of the claims 11-13, wherein the step of manufacturing the transition member comprises an additive manufacturing method.

15. A method according to any of the claims 11-14, wherein the step of connecting the members comprises sinter fusing.
